Europäisches Patentamt

European Patent Office

Office européen des brevets

(11) Veröffentlichungsnummer: **0 429 917 A2**

# EUROPÄISCHE PATENTANMELDUNG

(21) Anmeldenummer: 90121451.0

(22) Anmeldetag: 09.11.90

(51) Int. Cl.5: **B23G 5/20**

(30) Priorität: 01.12.89 DE 3939795

(43) Veröffentlichungstag der Anmeldung:
05.06.91 Patentblatt 91/23

(84) Benannte Vertragsstaaten:
AT BE CH DE DK ES FR GB GR IT LI LU NL SE
Patentblatt 00/5

(71) Anmelder: Schmitt, Norbert M., Dr.
Schwalbenweg 3
W-8501 Feucht(DE)

(72) Erfinder: Schmitt, Norbert M., Dr.
Schwalbenweg 3
W-8501 Feucht(DE)

(74) Vertreter: Böhme, Volker, Dipl.-Ing. et al
Patentanwälte Dipl.-Ing. E. Kessel Dipl.Ing. V.
Böhme Karolinenstrasse 27
W-8500 Nürnberg 1(DE)

(54) **Verfahren zur Herstellung einer Gewindebohrung.**

(57) Es gibt eine Herstellung einer Gewindebohrung in einem Werkstück 15, bei der unter axialen Vorschub eines Bohrgewindefräsers 14 ein Kernloch 9 in dem Werkstück 15 erzeugt wird und durch eine Wendelbewegung des Bohrgewindefräsers 14 an der Lochwandung Gewindegänge erzeugt werden. Dabei ist es erwünscht, wenn mit dem Bohrgewindefräser Kernlöcher erzeugt werden können, deren Durchmesser größer als der Bohrschneide-Außendurchmesser des Bohrgewindefräsers ist. Dies ist erreicht, indem der Bohrgewindefräser 14 zur Erzeugung des Kernloches 19 auf einer Wendelbahn 11, 12 relativ zum Werkstück 15 bewegt wird. je nach Einstellung des Radius der Wendelbahn wird ein verschieden großer Innendurchmesser des Kernloches erreicht.

Fig.5

## VERFAHREN ZUR HERSTELLUNG EINER GEWINDEBOHRUNG

Die Erfindung betrifft ein Verfahren zur Herstellung einer Gewindebohrung in einem Werkstück, mittels eines rotierenden Bohrgewindefräsers, der eine Bohrschneide und Gewindefräszähne aufweist und bei dem der Außendurchmesser der Bohrschneide gleich dem oder größer als der Durchmesser der Gewindefräszähne ist, bei dem zunächst mit der Bohrschneide unter axialem Vorschub des Bohrgewindefräsers ein Kernloch in dem Werkstück erzeugt wird und danach mit den Gewindefräszähnen durch eine Wendelbewegung des Bohrgewindefräsers an der Lochwandung Gewindegänge erzeugt werden, und bei dem eine NC-gesteuerte Werk-zeugmaschine mit einer 3-Achsen-Steuerung für die Wendelbewegung verwendet wird.

Bei einem bekannten (US-PS 46 51 374) Verfahren dieser Art wird der Bohrgewindefräser zur Erzeugung des Kernloches nur axial bewegt. Nach diesem Verfahren lassen sich mit dem Bohrgewindefräser nur Kernlöcher mit einem Durchmesser herstellen, der dem Außendurchmesser der Bohrschneide entspricht. Es ist also für jeden Kernloch-Durchmesser ein eigener Bohrgewindefräser nötig.

Eine Aufgabe der Erfindung ist es daher, ein Verfahren der eingangs genannten Art zu schaffen, bei dem sich mit dem Bohrgewindefräser Kernlöcher erzeugen lassen, deren Durchmesser größer als der Bohrschneide-Außendurchmesser des Bohrgewindefräsers ist. Das erfindungsgemäße Verfahren ist, diese Aufgabe lösend, dadurch gekennzeichnet, daß der Bohrgewindefräser zur Erzeugung des Kernloches auf einer Wendelbahn relativ zum Werkstück bewegt wird.

Da sich die Bohrschneide bei der Erzeugung des Kernloches auf der Wendelbahn bewegt, ist der Durchmesser des Kernloches größer als der Außendurchmesser der Bohrschneide. je nach Einstellung des Radius der Wendelbahn wird ein verschieden großer Innendurchmesser des Kernloches er reicht. Die Zahl der Einsatzmöglichkeiten des Bohrgewindefräsers ist aufgrund der Anwendung der Wendelbewegung bei der Kernlocherzeugung gesteigert. Da die den Bohrgewindefräser treibende Maschine für die Erzeugung der Gewindegänge sowieso Wendelbewegungen veranlassen kann, ist die vorhandene Maschine verwendbar und verbessert ausgenutzt. Streng genommen bewegt sich die Mittelachse des Bohrgewindefräsers auf der Wendelbahn und machen die anderen Bereiche des Bohrgewindefräsers eine Bewegung, die sich aus der Wendelbahn und der Rotation zusammensetzt.

Die für die Wendelbahn erforderliche Wendelbewegung kann das Werkstück machen und macht in der Regel der Bohrgewindefräser selbst oder kann sich aus einer Kombination von Bewegungen von Werkstück und Bohrgewindefräser ergeben. Wenn der Radius der Wendelbewegung größer wird als der Außendurchmesser der Bohrschneide, dann kann beim Erzeugen des Kernloches mittels Wendelbewegung in der Mitte ein Zapfen stehen bleiben. In diesem Fall wird entweder in der Mitte vorab ein Vorloch, z.B. mittels des Bohrgewindefräsers, vorgesehen, um die Entstehung des Zapfens zu vermeiden, oder wird der entstandene Zapfen nachträglich weggebohrt. Die Erfindung umfaßt auch die Werkzeugmaschine, die aufgrund geeigneter Steuerung entsprechend dem erfindungsgemäßen Verfahren arbeitet.

In der Zeichnung ist eine bevorzugte Ausführungsform der Erfindung dargestellt und zeigt

Fig. 1     eine Seitenansicht eines Bohrgewindefräsers,

Fig. 2     eine Stirnansicht des Bohrgewindefräsers gemäß Fig. 1,

Fig. 3     eine weitere Seitenansicht des Bohrgewindefräsers gemäß Fig. 1,

Fig. 4     einen Längsschnitt eines Teiles des Bohrgewindefräsers gemäß Fig. in einem gegenüber Fig. 1 ver größerten Maßstab,

Fig. 5     schematisch eine Zuordnung des Bohrgewindefräsers gemäß Fig. 1 zu einem Werkstück und

Fig. 6     eine Verdeutlichung der Bewegung des Bohrgewindefräsers gemäß Fig. 1 beim Erzeugen eines Kernloches.

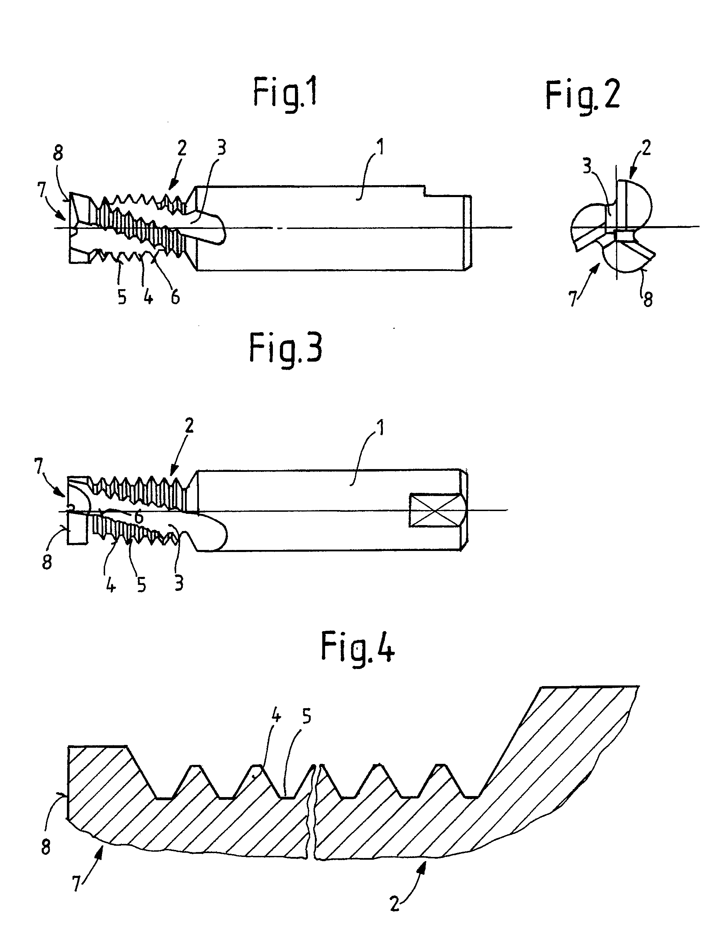

Der Bohrgewindefräser gemäß Fig. 1 - 4 weist hinten einen Aufnahmeschaft 1 zum Einsatz in ein Spannwerkzeug an einer Werkzeugspindel einer Werkzeugmaschine auf. An den Aufnahmeschaft 1 schließt sich nach vorne hin ein Fräsbereich 2 an, der mit drei Drallnuten 3 versehen ist und zwei Reihen von hintereinander angeordneten Gewindezähnen 4 aufweist, wobei die Reihen in axialer Richtung oder besser in Drallrichtung verlaufen. Die Gewindefräszähne 4 begrenzen zwischen sich je eine Nut 5 und bilden Gewindefrässchneiden 6. Der Bohrgewindefräser läuft nach vorne hin in einem Endstück 7 aus, das mit Bohrschneiden 8 versehen ist, die einerseits als Stirnschneiden in einer zur Mittelachse rechtwinkeligen Ebene verlaufen und dann nach einer spitzen Abknickung in einer Mantelfläche in Mantelschneiden übergehen, die bei der Erzeugung des Kernloches ebenfalls mitwirken. Gemäß Fig. 4 sind die in einer Reihe angeordneten Gewindefräszähne 4 gleichgroß.

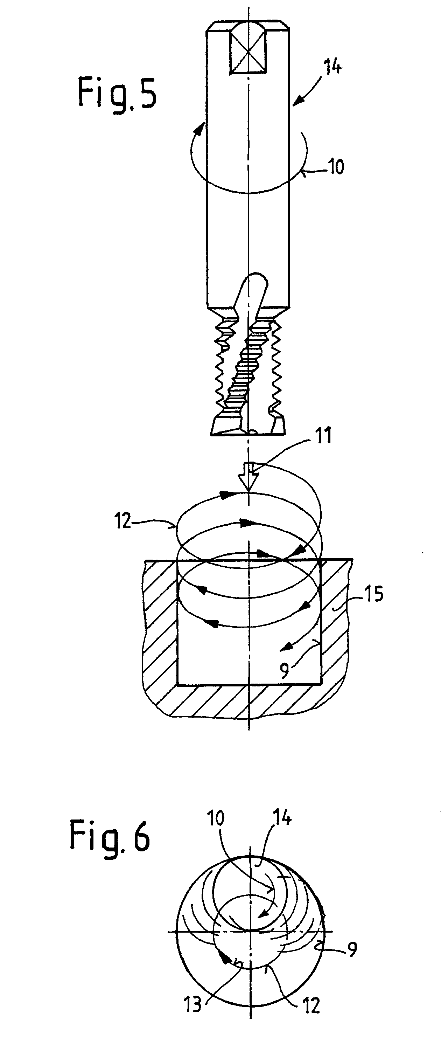

Gemäß Fig. 5 und 6 rotiert der Bohrgewindefräser 14 bei der Herstellung eines Kernloches 9 in einem Werkstück 15 genäß einem Pfeil 10. Dabei wird der Bohrgewindefräser 14 entlang einer Wendelbahn 12 vorgeschoben, die sich aus einer axialen Vorschubbewegung 11 und einer kreisenden Bewegung 13 zusammensetzt. In fig. 6 zeigt ein Kreis 13 die kreisende Bewegung der Mittelachse des Bohrgewindefräsers 14 in Relation zum Kernloch 9 an.

## Ansprüche

Verfahren zur Herstellung einer Gewindebohrung in einem Werkstück, mittels eines rotierenden Bohrgewindefräsers, der ein Bohr-Endstück mit vorderen Bohrschneiden und Mantelschneiden und axial hinter dem Bohr-Endstück Gewindefräs-zähne in axialen Reihen aufweist und bei dem der Außendurchmesser der Bohrschneide gleich dem oder größer als der Außendurchmesser der Gewindefräszähne ist, bei dem zunächst mit den Bohrschneiden unter axialen Vorschub des Bohrgewindefräsers ein Kernloch in dem Werkstück erzeugt wird und danach mit den Gewindefräszähnen durch eine Wendelbewegung des Bohrgewindefräsers an der Kernlochwandung Gewindegänge erzeugt werden, und bei dem eine NC-gesteuerte Werkzeugmaschine mit einer 3-Achsen-Steuerung für die Wendelbewegung verwendet wird, **dadurch gekennzeichnet**, daß der Bohrgewindefräser (14) zur Erzeugung des Kernloches (19) auf einer Wendelbahn (11, 12) relativ zum Werkstück (15) bewegt wird, wobei die vorderen Bohrschneiden zur Fräsermittelachse rechtwinkelig verlaufende Stirnschneiden sind.

EP 0 429 917 A2

Fig.1

Fig.2

Fig.3

Fig.4

4

Fig.5

14

10

11

12

15

9

Fig.6

10    14

9

13    12